# EUROPÄISCHE PATENTANMELDUNG

(11) **EP 4 838 139 A1**
(43) Veröffentlichungstag der Anmeldung: **11.11.2026**
(21) Anmeldenummer: 26173897.5
(22) Anmeldetag: 22.04.2026
(51) Int. Cl.: F24C 15/02, F16J 15/06, H05B 6/76

(54) **VERSTEIFUNGSELEMENT FÜR HOHLKAMMERDICHTUNGSPROFILE**

(30) Priorität: 08.05.2025 DE 102025117570
(71) Anmelder: Silnova GmbH, 95111 Rehau (DE)
(72) Erfinder: Rietsch, Bernd, 95111 Rehau (DE); Wilfert, Jonas, 95111 Rehau (DE)

(57) **Zusammenfassung**

Die Erfindung betrifft ein Versteifungselement (8) für Hohlkammerdichtungsprofile (2) von Hausgeräten, mit einem in das Hohlkammerdichtungsprofil (2) einzuführenden Längsabschnitt (10) und einem an den Längsabschnitt (10) angeformten hakenförmigen Anschlusselement (12) zur Anbindung des Hohlkammerdichtungsprofils (2) an das Hausgerät. Erfindungsgemäß ist das Anschlusselement (12) quer, vorzugsweise senkrecht, zum Längsabschnitt (10) ausgerichtet.

## Beschreibung

Die Erfindung betrifft ein Versteifungselement für Hohlkammerdichtungsprofile von Hausgeräten, mit
- einem in das Hohlkammerdichtungsprofil einzuführenden Längsabschnitt und
- einem an den Längsabschnitt angeformten hakenförmigen Anschlusselement zur Anbindung des Hohlkammerdichtungsprofils an das Hausgerät.

Ein derartiges Versteifungselement ist beispielsweise aus der EP 2 027 402 B1 bekannt. Das Versteifungselement hat den Zweck, ein Knicken des Hohlkammerdichtungsprofils, welches beispielsweise zur Abdichtung von geschlossenen Backofen- oder auch Mikrowellengerätetüren dient, zu verhindern, bei dem genannten Stand der Technik in Eckbereichen mit entsprechenden Krümmungen des Dichtungsprofils.

Für längere gerade Bereiche des Hohlkammerdichtungsprofils ist es bekannt, lange Versteifungsschienen zu verwenden, welche der Länge nach in das Dichtungsprofil eingefädelt und danach über seitliche Öffnungen im Dichtungsprofil mit Befestigungsclips versehen werden müssen. Die Konfektionierung ist hierdurch vergleichsweise aufwändig und somit verbesserungsbedürftig.

Vor diesem Hintergrund liegt der Erfindung die Aufgabe zugrunde, die Knickvermeidung des Hohlkammerdichtungsprofils insgesamt zu vereinfachen.

Ausgehend von einem Versteifungselement mit den eingangs genannten Merkmalen wird diese Aufgabe erfindungsgemäß dadurch gelöst, dass das Anschlusselement quer, vorzugsweise senkrecht, zum Längsabschnitt ausgerichtet ist. Im Rahmen der Erfindung wurde erkannt, dass eine Vielzahl solcher Versteifungselemente in Längsabschnitten hintereinander gereiht die im Stand der Technik übliche Versteifungsschiene ersetzen kann. Die erfindungsgemäßen Versteifungselemente sind hierbei wesentlich einfacher am Hohlkammerdichtungsprofil montierbar als eine solche Schiene und überdies entfällt auch die nachträgliche Montage von Befestigungsclips. Insbesondere können die erfindungsgemäßen Versteifungselemente jeweils einzeln durch seitliche Öffnungen im Dichtungsprofil in dessen Hohlkammer eingeführt werden, so dass ein mühsames Einfädeln in selbige entbehrlich ist. Ferner ist es unschädlich, wenn die in der Hohlkammer des Dichtungsprofils hintereinander angeordneten erfindungsgemäßen Versteifungselemente einen gewissen Abstand voneinander besitzen, da auch in diesem Fall eine ausreichende Stabilität des Dichtungsprofils gewährleistet ist. Somit ist erfindungsgemäß zusätzlich eine Materialersparnis gegenüber der Schienenlösung vorhanden.

Vorzugsweise besitzt der Längsabschnitt eine sich in Längsrichtung erstreckende bügelförmige Ausnehmung. Dies erhöht die Verformbarkeit des Versteifungselementes und ist insbesondere beim Einführen in das Dichtungsprofil von Vorteil. Hierbei kann das Anschlusselement an das freie Ende des von der Ausnehmung gebildeten Bügels angeformt sein. Gemäß einer bevorzugten Ausführungsform der Erfindung ist das Anschlusselement clipartig ausgebildet. Der Längsabschnitt kann eine, vorzugsweise dreiecksförmige, Versteifung zur Erleichterung des Einführvorgangs aufweisen. Zweckmäßigerweise wird das Versteifungselement zunächst mit dieser Versteifung in das Hohlkammerdichtungsprofil eingeführt. Die Versteifung ist zweckmäßigerweise an dem der Ausnehmung gegenüberliegenden Ende des Längsabschnittes angeordnet.

Das Versteifungselement kann aus Metall, alternativ aber auch aus einem, vorzugsweise spritzgegossenen, Kunststoff bestehen. Eine Kunststofflösung ist insbesondere beim Einsatz in Mikrowellengeräten aufgrund der Gefahr von Funkenüberschlägen bei Metall angezeigt. Vorzugsweise wird hierbei ein Hochtemperatur(HT)-Thermoplast verwendet.

Der Längsabschnitt kann eine Länge von maximal 70 mm, vorzugsweise maximal 50 mm, aufweisen. Bei einer solch geringen Länge ist ein problemloses Einführen des Versteifungselementes durch eine seitliche Öffnung im Hohlkammerdichtungsprofil möglich.

Gegenstand der Erfindung ist ferner eine Dichtungsanordnung mit einem, vorzugsweise extrudierten, Hohlkammerdichtungsprofil (z.B. aus einem Elastomer, insbesondere Silikon) mit mehreren hintereinander in das Profil eingeführten Versteifungselementen der vorbeschriebenen Art, wobei die Anschlusselemente der Versteifungselemente jeweils eine seitliche, vorzugsweise als Bohrung ausgebildete, Öffnung im Hohlkammerdichtungsprofil durchfassen und nach außen hin abstehen. Die Bohrungen können kreisförmig ausgebildet sein und haben beispielsweise einen Durchmesser von 2 bis 4 mm.

Zweckmäßigerweise sind die im Hohlkammerdichtungsprofil hintereinander angeordneten Versteifungselemente in Profillängsrichtung, vorzugsweise mindestens 10 mm, insbesondere mindestens 20 mm, voneinander beabstandet. Ferner sind vorzugsweise die Öffnungen des Hohlkammerdichtungsprofils in Profillängsrichtung voneinander beabstandet und zweckmäßigerweise ist zur Aufnahme eines Versteifungselement jeweils eine separate Öffnung im Dichtungsprofil vorgesehen.

Insbesondere kann das Hohlkammerdichtungsprofil ringförmig angeordnet und mittels der Anschlusselemente an einem Verschlusselement, insbesondere einer Tür, des Hausgerätes montierbar sein. Die Ringform des Hohlkammerdichtungsprofils kann hierbei gerade und gekrümmte Abschnitte aufweisen, wobei die Versteifungselemente in den geraden und/oder in den gekrümmten Abschnitten angeordnet sind.

Gegenstand der Erfindung ist ferner ein Verfahren zur Konfektionierung einer Dichtungsanordnung gemäß Anspruch 13.

Im Folgenden wird die Erfindung anhand einer lediglich ein Ausführungsbeispiel darstellenden Zeichnung erläutert. Es zeigen schematisch:
- Fig.1: eine Versteifungsschiene für ein Hohlkammerdichtungsprofil gemäß dem Stand der Technik,
- Fig. 2: ein solches Hohlkammerdichtungsprofil in einer Querschnittsdarstellung,
- Fig. 3: ein erfindungsgemäßes Versteifungselement in einer dreidimensionalen Ansicht,
- Fig. 4: eine erfindungsgemäße Dichtungsanordnung und
- Fig. 5: den Schnitt A - A in Fig. 4.

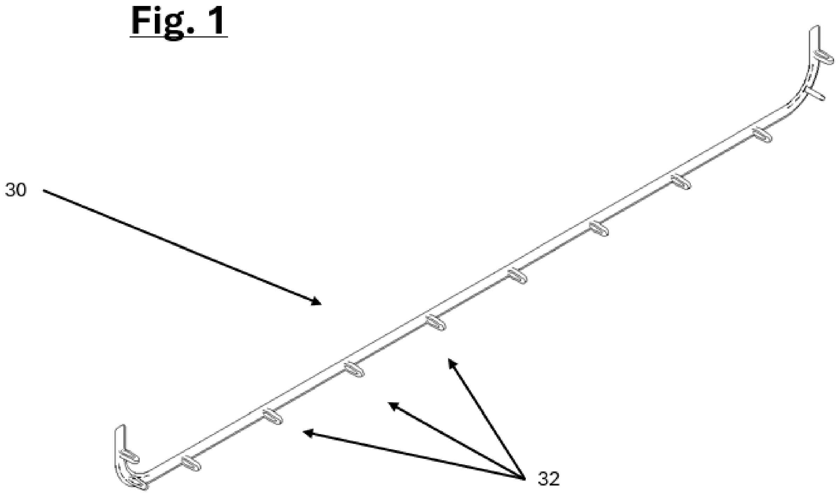

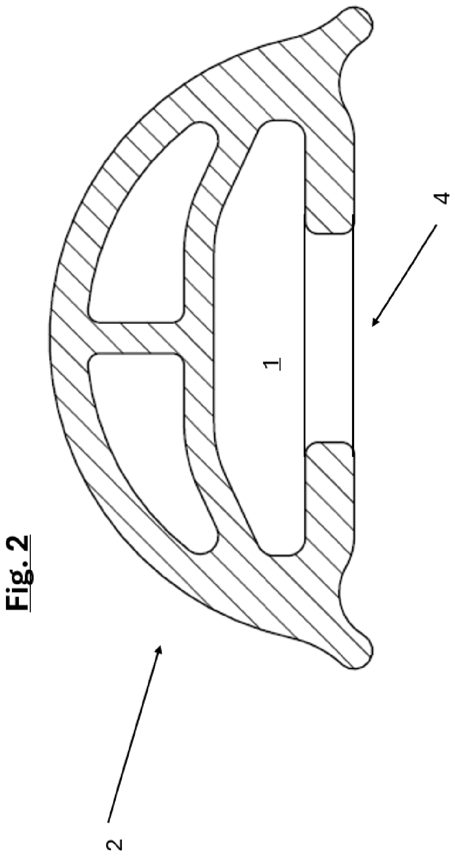

Fig. 1 zeigt eine Versteifungsschiene 30 für ein Hohlkammerdichtungsprofil 2 eines (nicht näher dargestellten) Hausgerätes, z.B. für einen Backofen oder eine Mikrowelle gemäß dem Stand der Technik. Die Versteifungsschiene 30 hat eine sehr große Ausdehnung in Schienenlängsrichtung sowie endseitig angeformte gekrümmte Abschnitte 32. Diese Versteifungsschiene 30 wird in eine Hohlkammer 1 eines, exemplarisch in Fig. 2 im Querschnitt gezeigten, Hohlkammerdichtungsprofils 2 des Hausgerätes der Länge nach eingefädelt, welches hierdurch die entsprechende, durch die Versteifungsschiene 30 definierte Form annimmt. In Fig. 1 ist erkennbar, dass entlang der Versteifungsschiene 30 in Schienenlängsrichtung voneinander beabstandete, seitlich abstehende Verbindungsclips 32 vorgesehen sind. Diese Verbindungsclips 32 werden nach dem Einfädelvorgang der Schiene 30 in das Dichtungsprofil 2 durch seitliche Öffnungen 4 in diesem Profil 2 (vergl. Fig. 2) mit der Schiene 30 verbunden, so dass das entsprechend versteifte Dichtungsprofil 2 mittels der Clips 32 an einer Tür des Hausgerätes montiert werden kann und sodann als Türdichtung für das Hausgerät fungiert.

Die Fig. 2 zeigt ein übliches Hohlkammerdichtungsprofil 2 für ein Hausgerät im Querschnitt im Bereich einer seitlichen Öffnung 4. Diese Öffnungen 4 sind - analog zu den in Fig. 1 dargestellten Verbindungsclips 32 - entlang des Profils 2 in regelmäßigen Abständen vorgesehen. Gemäß dem Stand der Technik, wie er zuvor beschrieben ist, werden durch diese Öffnungen 4 hindurch die Verbindungsclips 32 mit der Versteifungsschiene 30 verbunden, welche zuvor über ihre gesamte axiale Länge hinweg in die entsprechende Hohlkammer 6 des Hohlkammerdichtungsprofils 2 eingefädelt wurde.

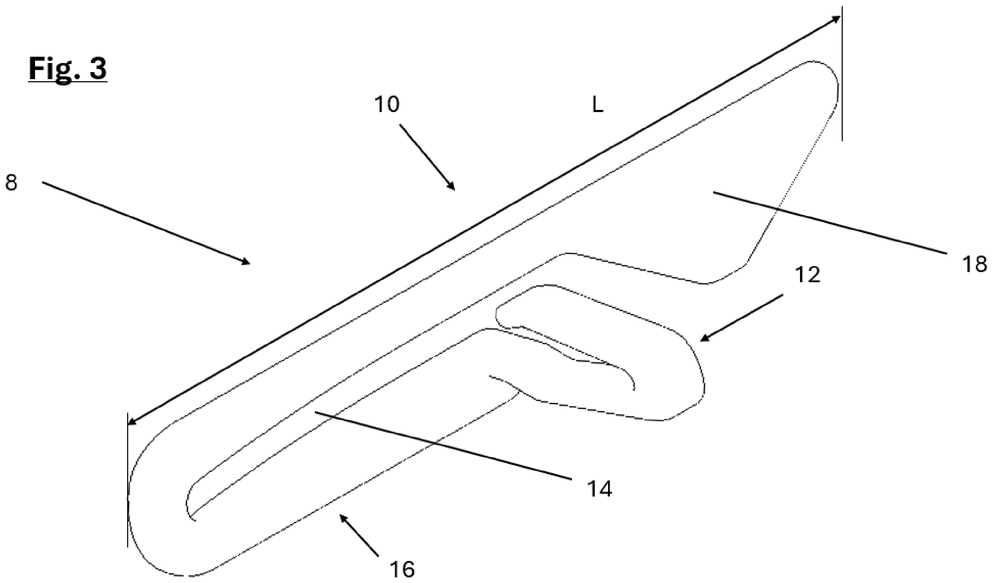

Fig. 3 zeigt nun in einer dreidimensionalen Darstellung ein erfindungsgemäßes Versteifungselement 8 für das zuvor beschriebene Hohlkammerdichtungsprofil 2 gemäß Fig. 2. Das Versteifungselement 8 weist einen in das Hohlkammerdichtungsprofil 2 einzuführenden, im Ausführungsbeispiel gerade ausgebildeten Längsabschnitt 10 und ein an den Längsabschnitt 10 angeformtes hakenförmiges Anschlusselement 12 zur Anbindung des Hohlkammerdichtungsprofils 2 an das Hausgerät auf, welches im Ausführungsbeispiel ein Mikrowellengerät ist. Das Anschlusselement 12 ist quer, im Ausführungsbeispiel senkrecht, zum Längsabschnitt 10 ausgerichtet. Ferner weist der Längsabschnitt 10 eine sich in Längsrichtung erstreckende bügelförmige Ausnehmung 14 auf. Das Anschlusselement 12 ist an das freie Ende des von der Ausnehmung 14 gebildeten Bügels 16 angeformt und clipartig ausgebildet. Der Längsabschnitt 10 weist eine im Ausführungsbeispiel dreiecksförmige Versteifung 18 zur Erleichterung des Einführvorgangs des Versteifungselementes 8 durch eine Öffnung 4 in das Hohlkammerdichtungsprofil 2 auf. Das Versteifungselement 8 besteht im Ausführungsbeispiel aus einem Kunststoff-Spritzgussbauteil, wobei als Material ein Hochtemperatur (HT)-Thermoplast zum Einsatz kommt. Der Längsabschnitt 10 weist eine Länge L von maximal 50 mm auf.

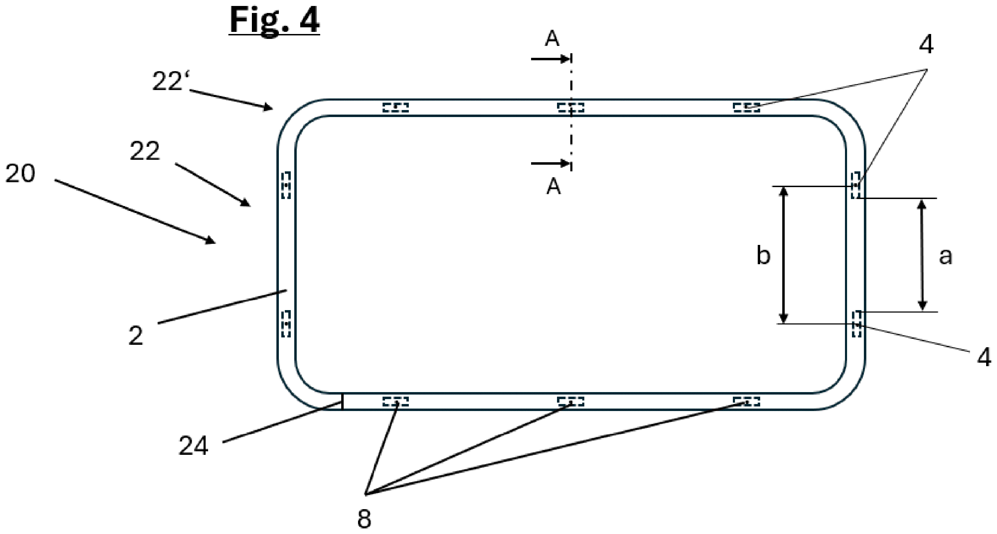

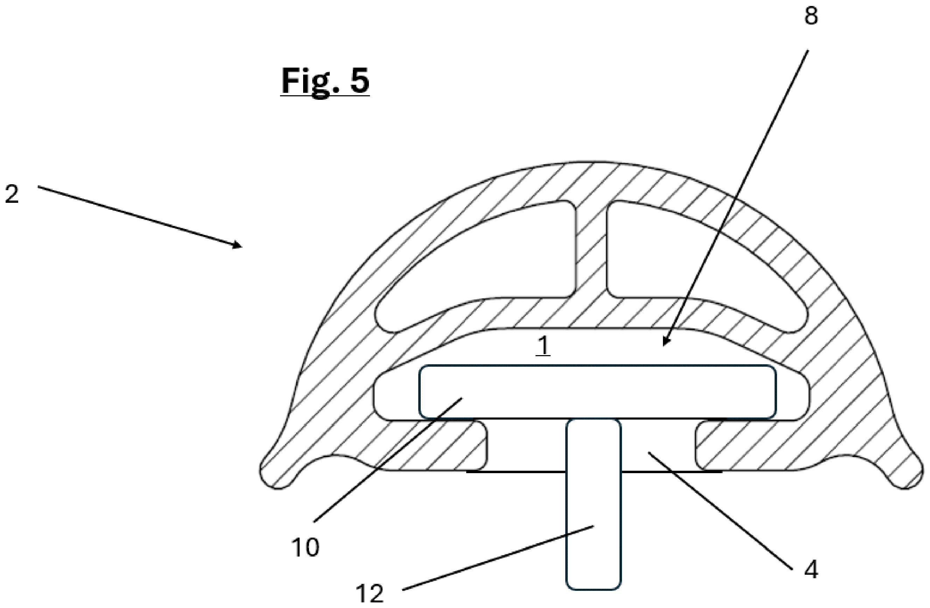

Figur 4 zeigt eine erfindungsgemäße Dichtungsanordnung 20 mit einem extrudierten Hohlkammerdichtungsprofil 2 aus Silikon mit mehreren hintereinander in das Profil 2 eingeführten erfindungsgemäßen (in Fig. 4 und 5 vereinfacht dargestellten) Versteifungselementen 8. Wie insbesondere der Fig. 5 zu entnehmen ist, durchfassen die Anschlusselemente 12 der Versteifungselemente 8 jeweils eine seitliche, im Ausführungsbeispiel als kreisförmige Bohrung ausgebildete Öffnung 4 im Hochkammerdichtungsprofil 2 und stehen nach außen hin seitlich ab. Die im Hohlkammerdichtungsprofil 8 hintereinander angeordneten Versteifungselemente 8 sind in Profillängsrichtung um a > 10 mm voneinander beabstandet. Auch die Öffnungen 4 des Hohlkammerdichtungsprofils 2 sind in Profillängsrichtung voneinander beabstandet, z.B. um b > 50 mm und zur Aufnahme eines Versteifungselementes 8 ist jeweils eine separate Öffnung 4 vorgesehen. Das Hohlkammerdichtungsprofil 2 ist unter Bildung einer Stoßkante 24 ringförmig angeordnet und mittels der Anschlusselemente 12 an einer Tür des Mikrowellengerätes montierbar. Die Ringform des Hohlkammerdichtungsprofils 2 weist gerade und gekrümmte Abschnitte 22, 22' auf, wobei die Versteifungselemente 8 im Ausführungsbeispiel in den geraden Abschnitten 22 angeordnet sind. Nicht dargestellt, jedoch im Rahmen der Erfindung liegt es grundsätzlich aber auch, dass die Versteifungselemente 8 alternativ oder ergänzend in den gekrümmten Abschnitten 22' angeordnet sind und dann einen entsprechend gekrümmten Längsabschnitt 10 besitzen.

Bei der Konfektionierung einer Dichtungsanordnung 20 werden die Versteifungselemente 8 über die ihr jeweils zugeordnete Öffnung 4 in eine Hohlkammer 1 des Hohlkammerdichtungsprofils 2 eingeführt und hierdurch entlang des Dichtungsprofils 2 hintereinander beabstandet aufgereiht, so wie in den Fig. 4 und 5 gezeigt.

## Patentansprüche

1. Versteifungselement (8) für Hohlkammerdichtungsprofile (2) von Hausgeräten, mit
- einem in das Hohlkammerdichtungsprofil (2) einzuführenden Längsabschnitt (10) und
- einem an den Längsabschnitt (10) angeformten hakenförmigen Anschlusselement (12) zur Anbindung des Hohlkammerdichtungsprofils (2) an das Hausgerät,
**dadurch gekennzeichnet, dass** das Anschlusselement (12) quer, vorzugsweise senkrecht, zum Längsabschnitt (10) ausgerichtet ist.

2. Versteifungselement (8) nach Anspruch 1, **dadurch gekennzeichnet, dass** der Längsabschnitt (10) eine sich in Längsrichtung erstreckende bügelförmige Ausnehmung (14) aufweist.

3. Versteifungselement (8) nach Anspruch 2, **dadurch gekennzeichnet, dass** das Anschluss-element (12) an das freie Ende des von der Ausnehmung (14) gebildeten Bügels (16) angeformt ist.

4. Versteifungselement (8) nach einem der Ansprüche 1 bis 3, **dadurch gekennzeichnet, dass** das Anschlusselement (12) clipartig ausgebildet ist.

5. Versteifungselement (8) nach einem der Ansprüche 1 bis 4, **dadurch gekennzeichnet, dass** der Längsabschnitt (10) eine, vorzugsweise dreiecksförmige, Versteifung (18) zur Erleichterung des Einführvorgangs aufweist.

6. Versteifungselement (8) nach einem der Ansprüche 1 bis 5, **dadurch gekennzeichnet, dass** dieses aus Metall oder Kunststoff, vorzugsweise einem HT-Thermoplast, besteht.

7. Versteifungselement (8) nach einem der Ansprüche 1 bis 6, **dadurch gekennzeichnet, dass** der Längsabschnitt (10) eine Länge (L) von maximal 70 mm, vorzugsweise maximal 50 mm, aufweist.

8. Dichtungsanordnung (20) mit einem Hohlkammerdichtungsprofil (2) mit mehreren hintereinander in das Profil (2) eingeführten Versteifungselementen (8) nach einem das Ansprüche 1 bis 7, wobei die Anschlusselemente (12) der Versteifungselemente (8) jeweils eine seitliche, vorzugsweise als Bohrung ausgebildete, Öffnung (4) im Hohlkammerdichtungsprofil (2) durchfassen und nach außen hin abstehen.

9. Dichtungsanordnung (20) nach Anspruch 8, **dadurch gekennzeichnet, dass** die im Hohlkammerdichtungsprofil (2) hintereinander angeordneten Versteifungselemente (8) in Profillängsrichtung, vorzugsweise um mindestens (a) = 10 mm, voneinander beabstandet sind.

10. Dichtungsanordnung (20) nach Anspruch 8 oder 9, **dadurch gekennzeichnet, dass** die Öffnungen (4) des Hohlkammerdichtungsprofils (2) in Profillängsrichtung voneinander beabstandet sind und zur Aufnahme eines Versteifungselementes (8) jeweils eine separate Öffnung (4) vorgesehen ist.

11. Dichtungsanordnung (20) nach einem der Ansprüche 8 bis 10, **dadurch gekennzeichnet, dass** das Hohlkammerdichtungsprofil (2) ringförmig angeordnet und mittels der Anschlusselemente (12) an einem Verschlusselement, insbesondere einer Tür, des Hausgerätes montierbar ist.

12. Dichtungsanordnung (20) nach Anspruch 11, **dadurch gekennzeichnet, dass** die Ringform des Hohlkammerdichtungsprofils (2) gerade und gekrümmte Abschnitte (22, 22') aufweist, wobei die Versteifungselemente (8) in den geraden Abschnitten (22) und/oder in den gekrümmten Abschnitten (22') angeordnet sind.

13. Verfahren zur Konfektionierung einer Dichtungsanordnung (20) nach einem der Ansprüche 8 bis 12, wobei die Versteifungselemente (8) über die ihr jeweils zugeordnete Öffnung (4) in das Hohlkammerdichtungsprofil (2) eingeführt werden.
